Europäisches Patentamt

European Patent Office

Office européen des brevets

(11) Veröffentlichungsnummer: **0 534 087 A1**

# EUROPÄISCHE PATENTANMELDUNG

(21) Anmeldenummer: **92112741.1**

(51) Int. Cl.5: **B01D 53/36**, B01J 21/06

(22) Anmeldetag: **25.07.92**

(30) Priorität: **27.09.91 DE 4132168**

(43) Veröffentlichungstag der Anmeldung:
**31.03.93 Patentblatt 93/13**

(84) Benannte Vertragsstaaten:
**AT BE CH DE DK ES FR GB IT LI NL SE**

(71) Anmelder: **HÜLS AKTIENGESELLSCHAFT**
**Patentabteilung / PB 15 - Postfach 13 20**
**W-4370 Marl 1(DE)**

(72) Erfinder: **Jung, Jürgen, Dr.**
**Händelstr. 113**
**W-4270 Dorsten(DE)**
Erfinder: **Immendorf, Franz-Josef**
**Magnolienweg 1**
**W-4353 Oer-Erkenschwick(DE)**

(54) **Verfahren zur Entfernung von Stickoxiden aus Abgasen.**

(57) Die Erfindung betrifft ein Verfahren zur Entfernung von Stickoxiden aus Abgasen durch katalytische Reduktion der Stickoxide zu Stickstoff mit Hilfe von Ammoniak in Gegenwart eines Katalysators auf Basis von Titandioxid, wobei dem Abgas vor Überleiten über den Katalysator ein Alkohol zugesetzt und anschließend das Abgas bei Temperaturen von 150 bis 550 °C über den Katalysator geleitet wird.

EP 0 534 087 A1

Die Erfindung betrifft ein Verfahren zur Entfernung von Stickoxiden aus Abgasen durch katalytische Reduktion der Stickoxide zu Stickstoff mit Hilfe von Ammoniak in Gegenwart eines Katalysators auf Basis von Titandioxid.

Bei den katalytischen Verfahren zur Entfernung von Stickoxiden aus Abgasen wird Ammoniak als Reduktionsmittel eingesetzt. Die am Katalysator ablaufenden chemischen Reaktionen sind einmal die Reduktion von Stickoxiden mit Ammoniak zu Stickstoff und Nasser und darüber hinaus die Oxidation von Schwefeldioxid zu Schwefeltrioxid, welches mit Wasser und Ammoniak Schwefelsäure und Ammoniumhydrogensulfat bildet. Letztere Produkte sind unerwünscht, da sie in den kälteren Anlagenteilen, die hinter dem Reaktor geschaltet sind, erhebliche Korrisionsprobleme verursachen.

Aus der DE-PS 24 58 888 ist ein Verfahren zum Entfernen von Stickstoffoxiden aus sauerstoffhaltigen Abgasen durch katalytische Reduktion zu Stickstoff mit Hilfe von Ammoniak bekannt. Die katalytische Umsetzung findet bei Temperaturen von 150 bis 550 °C an Katalysatoren auf Basis von Titandioxid statt.

JP-OS 90/233 124 und DE-OS 25 39 346 beschreiben ein katalytisches Verfahren zur Stickoxidentfernung, bei dem das Reduktionsmittel Ammoniak vollständig durch Alkohole, Aldehyde oder organische Säuren ersetzt wird.

EP-A 0 313 115 lehrt, daß die Reduktion von Stickoxiden aus sauerstoffhaltigen Abgasen in einer nichtkatalytischen, homogenen Gasphasenreaktion mit Ammoniak und in Gegenwart eines aliphatischen Alkohols bei Temperaturen von 550 bis 680 °C stattfinden kann.

Des weiteren ist aus U.S. Environ. Prot. Agency, Res. Dev., [Rep.] EPA, EPA-600/9-89-062b, Proc. - Jt. Symp. Stationary Combust. NOx Control, 198 7B.29-7B.45 von Lyon, Richard K. (referiert in Chemical Abstracts CA 113 (20): 177 423t) ein nichtkatalytisches Verfahren bekannt, bei dem Methanol bei Temperaturen von über 700 °C in das Verbrennungsgas injiziert wird.

Durch homogene Gasphasenreaktion wird einerseits das NO zu $NO_2$ oxidiert und das $SO_3$ zu $SO_2$ reduziert. Die Reaktionsprodukte können durch eine anschließende Naßwäsche aus dem Abgas entfernt werden.

Allerdings ist bei den nichtkatalytischen Verfahren zur Entfernung von Stickoxiden aus Abgasen ein großer Energieaufwand notwendig, um die hohen Temperaturen von größer als 550 °C zu erreichen. Auch haben sich diese SNCR(selektiv nicht katalytische Reduktion)-Verfahren in der Praxis nicht weit verbreiten können, da stark schwankende Temperaturen im Verbrennungskessel vorliegen und große $NH_3$-Schlupfwerte aufgetreten sind.

Zur Entfernung von Stickoxiden aus Rauchgasen werden weitestgehend katalytische Verfahren angewandt. Allerdings weisen diese katalytischen Verfahren die unerwünschte Nebenreaktion der $SO_2$-Oxidation zu $SO_3$ auf. Die Verbrennung schwefelhaltiger Brennstoffe liefert Rauchgase, deren Schwefeloxide zu 98 % aus $SO_2$ und zu 1 bis 2 % aus $SO_3$ bestehen. Am Katalysator zur Entfernung von Stickoxiden wird ein Teil des $SO_2$ in den Rauchgasen zu $SO_3$ oxidiert, woraus sich Schwefelsäure bzw. bei der Verwendung von $NH_3$ als Reduktionsmittel Ammoniumhydrogensulfat bilden können. Die Kondensation beider Stoffe in den nachgeschalteten, kälteren Anlagenteilen führt zu erheblichen Korrosionsproblemen. Die chemische Oxidation von $SO_2$ zu $SO_3$ wird auch als $SO_2/SO_3$-Konversion bezeichnet.

Katalytische Verfahren zur Entfernung von Stickoxiden aus Abgasen, in denen als Reduktionsmittel ausschließlich Alkohole, Aldehyde oder organische Säuren verwendet werden, zeigen gegenüber Verfahren, die mit $NH_3$ als Reduktionsmittel arbeiten, einen wesentlich schlechteren Umsatzgrad an Stickoxiden.

Bei Verwendung organischer Reduktionsmittel kann sich elementarer Kohlenstoff bilden, der sich auf dem Katalysator ablagert und ihn dadurch vergiftet. Die freiwerdende Reaktionswärme bei der Stickoxid-Reduktion mit organischen Reduktionsmitteln ist wesentlich größer als die bei der mit Ammoniak und macht den Einbau von Wärmetauschern notwendig.

Der vorliegenden Erfindung liegt die Aufgabe zugrunde, bei der katalytischen, reduktiven Entfernung von Stickoxiden aus Abgasen mit Hilfe von Ammoniak in Gegenwart eines Katalysators auf Basis von Titandioxid die $SO_2/SO_3$-Konversion zu vermindern.

Es wurde nun überraschenderweise gefunden, daß die $SO_2/SO_3$-Konversion drastisch vermindert wird, wenn man dem Abgas vor Überleiten über den Katalysator einen Alkohol zusetzt und anschließend das Abgas bei Temperaturen von 150 bis 550 °C über den Katalysator leitet. Hierbei wird die katalytische Stickoxid-Reduktion mit Ammoniak kaum beeinträchtigt und der Katalysator durch den Alkoholzusatz nicht irreversibel vergiftet.

Gegenstand der vorliegenden Erfindung ist daher ein Verfahren zur Entfernung von Stickoxiden aus Abgasen durch katalytische Reduktion der Stickoxide zu Stickstoff mit Hilfe von Ammoniak in Gegenwart eines Katalysators auf Basis von Titandioxid, das dadurch gekennzeichnet ist, daß dem Abgas vor Überleiten über den Katalysator ein Alkohol zugesetzt und anschließend das Abgas bei Temperaturen von 150 bis 550 °C über den Katalysator geleitet wird.

Das erfindungsgemäße Verfahren eignet sich zur Entfernung von Stickoxiden aus den verschiedensten Abgasen, z. B. aus Abgasen von chemischen Produktionsanlagen sowie aus Abgasen von Verbrennungsanlagen.

Insbesondere eignet sich das erfindungsgemäße Verfahren zur Entfernung von Stickoxiden aus Rauchgasen z. B. von Kraftwerken oder Müllverbrennungsanlagen.

Vorzugsweise werden dem Abgas pro Mol Ammoniak 0,01 bis 10 Mole Alkohol, besonders vorzugsweise pro Mol Ammoniak 0,05 Mole bis 1 Mol Alkohol, zugesetzt.

Der zugegebene Alkohol wird nahezu quantitativ zu Kohlendioxid und Wasser oxidiert, so daß das Abgas praktisch nicht mit Aldehyden und Säuren, den Oxidationsprodukten des Alkohols, verunreinigt wird. Bei dem bevorzugten Molverhältnis Alkohol zu Ammoniak von 0,01 bis 10 Mole Alkohol pro Mol Ammoniak ist die Reaktionswärme, die bei der Oxidation des Alkohols zu Kohlendioxid und Wasser frei wird, so gering, daß keine meßbare Temperaturerhöhung des Abgases am Katalysator auftritt.

Die Zugabe von Ammoniak zum Abgas erfolgt gemäß dem Stand der Technik, z. B. gemäß der Lehre der DE-AS 24 58 888. So ist es vorteilhaft, Ammoniak in der etwa 0,5- bis 10fachen molaren Menge der im Abgas enthaltenen Stickoxide, insbesondere in etwa äquimolarer Menge, zuzusetzen.

Alkohol und Ammoniak können sowohl getrennt wie auch zusammen dem Abgas zugegeben werden. Es ist vorteilhaft, wenn der Alkohol zusammen mit dem Ammoniak dem Abgas zugegeben wird. Dieses kann sowohl in Form einer wäßrigen Lösung von Alkohol und Ammoniak als auch über die Gasphase durch Verdampfen von flüssigem Ammoniak, der einen Alkohol enthält, geschehen. Durch letztere Maßnahme wird eine besonders einfache und betriebssichere Handhabung der Dosierung ermöglicht.

Erfindungsgemäß wird dem Abgas vorzugsweise ein Alkohol mit 1 bis 10 C-Atomen zugesetzt.

Vorteilhaft kann ein aliphatischer, cycloaliphatischer oder aromatischer Alkohol dem Abgas zugesetzt werden.

Neben einwertigen Alkoholen sind auch mehrwertige Alkohole wirksam. Darüber hinaus können primäre, sekundäre und tertiäre Alkohole eingesetzt werden.

Besonders bevorzugt wird dem Abgas Butanol zugesetzt.

Als Katalysatoren auf Basis von Titandioxid werden solche gemäß dem Stand der Technik, z. B. gemäß der Lehre der DE-AS 24 58 888, verwendet.

Vorzugsweise enthält der Katalysator außer Titandioxid noch weitere katalytisch aktive Komponenten, besonders vorzugsweise enthält der Katalysator als weitere katalytisch aktive Komponenten Vanadin und/oder Wolfram und/oder Molybdän und/oder Eisen und/oder Nickel und/oder Kobalt und/oder Kupfer und/oder Chrom und/oder Zirkonium.

Das Abgas wird bevorzugt bei Temperaturen von 200 bis 450 °C und bevorzugt mit Raumgeschwindigkeiten (GHSV = gas hourly space velocity) von 300 bis 100 000 $h^{-1}$ über den Katalysator geleitet.

Bei Kraftwerken unterscheidet man je nach räumlicher Anordnung des Reaktors zur Entfernung der Stickoxide zwischen sogenannten "High Dust"-Reaktoren und "Low Dust"-Reaktoren.

Der verbreitetste Reaktortyp ist der "High Dust"-Reaktor, der hinter dem Kessel nach dem Speisewasservorwärmer (ECO) und vor dem Luftvorwärmer (LUVO) installiert ist. Wird hingegen der Reaktor zur Entfernung der Stickoxide hinter einem Staubabscheider, wie z. B. einem Elektrofilter, angeordnet bzw. hinter der Rauchgasentschwefelungsanlage installiert, so spricht man von einem "Low Dust"-Reaktor.

"High Dust"-Reaktoren beinhalten Wabenkatalysatoren mit relativ großen Kanalöffnungen von ca. 6 mm Weite und werden bei Temperaturen von ca. 350 bis 450 °C betrieben. "Low Dust"-Reaktoren beinhalten wegen der geringeren Staubbeladung der Rauchgase Wabenkatalysatoren mit kleineren Kanalöffnungen von etwa 3 mm Weite. Diese "Low Dust"-Reaktoren arbeiten bei Temperaturen von 200 bis 320 °C.

Die kennzeichnende geometrische Größe eines Wabenkatalysators wird in "Pitch" angegeben, z. B. weist ein "7,1-Pitch"-Katalysator einen Abstand von Stegmitte zu Stegmitte von 7,1 mm auf, wobei die Kanalöffnung um die Wandstärke des Steges des Wabenkatalysators kleiner ist als der Pitch.

Die Erfindung wird durch die folgenden Beispiele näher erläutert:

Beispiel 1:

Es wird ein Wabenkatalysator mit 4,3 pitch, 6 x 6 Kanälen, einer Länge von 242 mm und einem Gehalt an Aktivkomponenten von 8 Gew.-% $WO_3$, 0,8 Gew.-% $V_2O_5$ und mehr als 75 Gew.-% $TiO_2$ verwendet.

Der Wabenkatalysator befindet sich in einem Strömungsrohrreaktor, der in einem Umluftofen beheizt wird. Die einzelnen Komponenten des Testgases, wie $O_2$, $NO_x$, $SO_2$, $NH_3$ und $N_2$, werden in einer Gasmischstrecke vor dem Katalysator vermischt, vorgewärmt und durch den Strömungsrohrreaktor geleitet.

Die Zugabe von Alkohol und Wasserdampf erfolgt durch Sättigung des Stickstoffstromes mit dem entsprechenden Alkohol und Wasser bei den entsprechenden Partialdrücken für die vorgegebenen Konzentrationen im Testgas.

Die Versuchsparameter sind nachfolgend zusammengestellt:

| Gaszusammensetzung des Testgases vor dem Wabenkatalysator: | 10 Vol.-% $H_2O$ |
|---|---|
| | 2 Vol.-% $O_2$ |
| | 500 Vol.-ppm $NO_x$ |
| | 500 Vol.-ppm $NH_3$ |
| | 800 Vol.-ppm $SO_2$ |
| | 50 Vol.-ppm n-Butanol |
| | Rest $N_2$ |
| Gasdurchsatz: | 1 200 l/h i. N. |
| Raumgeschwindigkeit des Testgases: | 7 510 $h^{-1}$ |
| Temperatur des Testgases: | 320 °C |

Das Testgas mit einem Gehalt an 500 Vol.-ppm $NH_3$ und 50 Vol.-ppm n-Butanol wird bei einer Temperatur von 320 °C über den Katalysator geleitet und anschließend analysiert.

Durch den Zusatz von 50 Vol.-ppm n-Butanol zum Testgas wird die $SO_2$/ $SO_3$-Konversionsrate bei 320 °C um 40 % relativ herabgesetzt. Die $SO_2$/ $SO_3$-Konversionsrate ohne Alkoholzusatz liegt bei 0,5 %.

Durch den Zusatz von 50 Vol.-ppm n-Butanol zum Testgas wird der Stickoxid-Umsatz (im weiteren als $NO_x$-Umsatz abgekürzt) am Katalysator bei 320 °C von 98,8 % auf 98,6 % reduziert.

Der Alkohol-Umsatz am Katalysator beträgt bei 320 °C über 95 %.

Beispiel 2:

Es wird ein Wabenkatalysator mit 4,3 pitch, 6 x 6 Kanälen, einer Länge von 319 mm und einem Gehalt an Aktivkomponenten von 8 Gew.-% $WO_3$, 1,0 Gew.-% $V_2O_5$ und mehr als 75 Gew.-% $TiO_2$ verwendet.

Die Versuchsanordnung ist die gleiche wie in Beispiel 1. Nachfolgend sind die Versuchsparameter zusammengestellt:

| Gaszusammensetzung des Testgases vor dem Wabenkatalysator: | 13 Vol.-% $H_2O$ |
|---|---|
| | 6 Vol.-% $O_2$ |
| | 700 Vol.-ppm $NO_x$ |
| | 700 Vol.-ppm $NH_3$ |
| | 400 Vol.-ppm $SO_2$ |
| | 10 Vol.-ppm n-Butanol |
| | Rest $N_2$ |
| Gasdurchsatz: | 951 l/h i. N. |
| Raumgeschwindigkeit des Testgases: | 4 200 $h^{-1}$ |
| Temperatur des Testgases: | 320 °C |

Das Testgas mit einem Gehalt an 700 Vol.-ppm $NH_3$ und 10 Vol.-ppm n-Butanol wird bei einer Temperatur von 320 °C über den Katalysator geleitet und anschließend analysiert.

Durch den Zusatz von 10 Vol.-ppm n-Butanol zum Testgas wird die $SO_2$/ $SO_3$-Konversionsrate bei 320 °C um 20 % relativ herabgesetzt. Die $SO_2$/ $SO_3$-Konversionsrate ohne Alkoholzusatz liegt bei 0,5 %.

Durch den Zusatz von 10 Vol.-ppm n-Butanol zum Testgas wird der $NO_x$-Umsatz am Katalysator nicht beeinflußt.

Der Alkohol-Umsatz am Katalysator beträgt bei 320 °C über 95 %.

Beispiel 3:

Es wird ein Wabenkatalysator mit 4,3 pitch, 6 x 6 Kanälen, einer Länge von 319 mm und einem Gehalt an Aktivkomponenten von 8 Gew.-% $WO_3$, 1,0 Gew.-% $V_2O_5$ und mehr als 75 Gew.-% $TiO_2$ verwendet.

Die Versuchsanordnung ist die gleiche wie in Beispiel 1. Nachfolgend sind die Versuchsparameter zusammengestellt:

4

| Gaszusammensetzung des Testgases vor dem Wabenkatalysator: | 13 Vol.-% $H_2O$<br>6 Vol.-% $O_2$<br>700 Vol.-ppm $NO_x$<br>700 Vol.-ppm $NH_3$<br>400 Vol.-ppm $SO_2$<br>70 Vol.-ppm n-Butanol<br>Rest $N_2$ |
|---|---|
| Gasdurchsatz:<br>Raumgeschwindigkeit des Testgases:<br>Temperatur des Testgases: | 951 l/h i. N.<br>4 200 $h^{-1}$<br>320 °C |

Das Testgas mit einem Gehalt an 700 Vol.-ppm $NH_3$ und 70 Vol.-ppm n-Butanol wird bei einer Temperatur von 320 °C über den Katalysator geleitet und anschließend analysiert.

Durch den Zusatz von 70 Vol.-ppm n-Butanol zum Testgas wird die $SO_2/SO_3$-Konversionsrate bei 320 °C um 60 % relativ herabgesetzt. Die $SO_2/SO_3$-Konversionsrate ohne Alkoholzusatz liegt bei 0,5 %.

Durch den Zusatz von 70 Vol.-ppm n-Butanol zum Testgas wird der $NO_x$-Umsatz am Katalysator bei 320 °C von 99,9 % auf 99,8 % reduziert.

Der Alkohol-Umsatz am Katalysator beträgt bei 320 °C über 95 %.

Beispiel 4:

Es wird ein Wabenkatalysator mit 4,3 pitch, 6 x 6 Kanälen, einer Länge von 242 mm und einem Gehalt an Aktivkomponenten von 8 Gew.-% $WO_3$, 0,8 Gew.-% $V_2O_5$ und mehr als 75 Gew.-% $TiO_2$ verwendet.

Die Versuchsanordnung ist die gleiche wie in Beispiel 1. Nachfolgend sind die Versuchsparameter zusammengestellt:

| Gaszusammensetzung des Testgases vor dem Wabenkatalysator: | 10 Vol.-% $H_2O$<br>2 Vol.-% $O_2$<br>500 Vol.-ppm $NO_x$<br>500 Vol.-ppm $NH_3$<br>800 Vol.-ppm $SO_2$<br>50 Vol.-ppm Isopropanol<br>Rest $N_2$ |
|---|---|
| Gasdurchsatz:<br>Raumgeschwindigkeit des Testgases:<br>Temperatur des Testgases: | 1 200 l/h i. N.<br>7 510 $h^{-1}$<br>380 °C |

Das Testgas mit einem Gehalt an 500 Vol.-ppm $NH_3$ und 50 Vol.-ppm Isopropanol wird bei einer Temperatur von 380 °C über den Katalysator geleitet und anschließend analysiert.

Durch den Zusatz von 50 Vol.-ppm Isopropanol zum Testgas wird die $SO_2/SO_3$-Konversionsrate bei 380 °C um 10 % relativ herabgesetzt. Die $SO_2/SO_3$-Konversionsrate ohne Alkoholzusatz liegt bei 1,1 %.

Durch den Zusatz von 50 Vol.-ppm Isopropanol zum Testgas wird der $NO_x$-Umsatz am Katalysator bei 380 °C von 99,8 % auf 99,6 % reduziert.

Der Alkohol-Umsatz an Katalysator beträgt bei 380 °C über 95 %.

Beispiel 5:

Es wird ein Wabenkatalysator mit 7,1 pitch, 4 x 4 Kanälen, einer Länge von 311 mm und einem Gehalt an Aktivkomponenten von 8 Gew.-% $WO_3$, 0,6 Gew.-% $V_2O_5$ und mehr als 75 Gew.-% $TiO_2$ verwendet.

Die Versuchsanordnung ist die gleiche wie in Beispiel 1. Nachfolgend sind die Versuchsparameter zusammengestellt:

| Gaszusammensetzung des Testgases vor dem Wabenkatalysator: | 10 Vol.-% $H_2O$<br>2 Vol.-% $O_2$<br>500 Vol.-ppm $NO_x$<br>500 Vol.-ppm $NH_3$<br>800 Vol.-ppm $SO_2$<br>50 Vol.-ppm Ethylenglykol<br>Rest $N_2$ |
|---|---|
| Gasdurchsatz:<br>Raumgeschwindigkeit des Testgases:<br>Temperatur des Testgases: | 1 200 l/h i. N.<br>4 710 $h^{-1}$<br>380 °C |

Das Testgas mit einem Gehalt an 500 Vol.-ppm $NH_3$ und 50 Vol.-ppm Ethylenglykol wird bei einer Temperatur von 380 °C über den Katalysator geleitet und anschließend analysiert.

Durch den Zusatz von 50 Vol.-ppm Ethylenglykol zum Testgas wird die $SO_2/SO_3$-Konversionsrate bei 380 °C um 7 % relativ herabgesetzt. Die $SO_2/SO_3$-Konversionsrate ohne Alkoholzusatz liegt bei 0,8 %.

Durch den Zusatz von 50 Vol.-ppm Ethylenglykol zum Testgas wird der $NO_x$-Umsatz am Katalysator bei 380 °C von 99,0 % auf 98,9 % reduziert.

Der Alkohol-Umsatz am Katalysator beträgt bei 380 °C über 95 %.

Beispiel 6:

Es wird ein Wabenkatalysator mit 7,1 pitch, 4 x 4 Kanälen, einer Länge von 311 mm und einem Gehalt an Aktivkomponenten von 8 Gew.-% $WO_3$, 0,6 Gew.-% $V_2O_5$ und mehr als 75 Gew.-% $TiO_2$ verwendet.

Die Versuchsanordnung ist die gleiche wie in Beispiel 1. Nachfolgend sind die Versuchsparameter zusammengestellt:

| Gaszusammensetzung des Testgases vor dem Wabenkatalysator: | 10 Vol.-% $H_2O$<br>2 Vol.-% $O_2$<br>500 Vol.-ppm $NO_x$<br>500 Vol.-ppm $NH_3$<br>800 Vol.-ppm $SO_2$<br>50 Vol.-ppm Benzylalkohol<br>Rest $N_2$ |
|---|---|
| Gasdurchsatz:<br>Raumgeschwindigkeit des Testgases:<br>Temperatur des Testgases: | 1 200 l/h i. N.<br>4 710 $h^{-1}$<br>380 °C |

Das Testgas mit einem Gehalt an 500 Vol.-ppm $NH_3$ und 50 Vol.-ppm Benzylalkohol wird bei einer Temperatur von 380 °C über den Katalysator geleitet und anschließend analysiert.

Durch den Zusatz von 50 Vol.-ppm Benzylalkohol zum Testgas wird die $SO_2/SO_3$-Konversionsrate bei 380 °C um 20 % relativ herabgesetzt. Die $SO_2/SO_3$-Konversionsrate ohne Alkoholzusatz liegt bei 0,8 %.

Durch den Zusatz von 50 Vol.-ppm Benzylalkohol zum Testgas wird der $NO_x$-Umsatz am Katalysator nicht beeinflußt.

Der Alkohol-Umsatz am Katalysator beträgt bei 380 °C über 95 %.

Beispiel 7:

Es wird ein Wabenkatalysator mit 4,3 pitch, 6 x 6 Kanälen, einer Länge von 242 mm und einem Gehalt an Aktivkomponenten von 8 Gew.-% $WO_3$, 0,8 Gew.-% $V_2O_5$ und mehr als 75 Gew.-% $TiO_2$ verwendet.

Die Versuchsanordnung ist die gleiche wie in Beispiel 1. Nachfolgend sind die Versuchsparameter zusammengestellt:

| Gaszusammensetzung des Testgases vor dem Wabenkatalysator: | 10 Vol.-% $H_2O$<br>2 Vol.-% $O_2$<br>500 Vol.-ppm $NO_x$<br>500 Vol.-ppm $NH_3$<br>800 Vol.-ppm $SO_2$<br>50 Vol.-ppm Methanol<br>Rest $N_2$ |
|---|---|
| Gasdurchsatz:<br>Raumgeschwindigkeit des Testgases:<br>Temperatur des Testgases: | 1 200 l/h i. N.<br>7 510 $h^{-1}$<br>320 °C |

Das Testgas mit einem Gehalt an 500 Vol.-ppm $NH_3$ und 50 Vol.-ppm Methanol wird bei einer Temperatur von 320 °C über den Katalysator geleitet und anschließend analysiert.

Durch den Zusatz von 50 Vol.-ppm Methanol zum Testgas wird die $SO_2$/$SO_3$-Konversionsrate bei 320 °C um 20 % relativ herabgesetzt. Die $SO_2$/$SO_3$-Konversionsrate ohne Alkoholzusatz liegt bei 0,5 %.

Durch den Zusatz von 50 Vol.-ppm Methanol zum Testgas wird der $NO_x$-Umsatz am Katalysator bei 320 °C von 98,8 % auf 98,3 % reduziert.

Der Alkohol-Umsatz am Katalysator beträgt bei 320 °C über 95 %.

Die $SO_2$/$SO_3$-Konversionsrate wird nach der Kondensationsmethode gemäß VGB-Beschreibung, Blatt 4.5.2, Ausgabe 1/88, bestimmt.

Der $NO_x$-Umsatz am Katalysator wird in einem beheizten Strömungsrohrreaktor gemessen. Das $NO_x$-Meßgerät arbeitet nach dem Prinzip der nichtdispersiven Infrarotabsorption.

Der Alkohol-Umsatz wird anhand von gaschromatographischen Analysen der auskondensierten Testgase bestimmt.

Hierbei berechnen sich die $SO_2$/$SO_3$-Konversionsrate, der $NO_x$-Umsatz und der Alkohol-Umsatz wie folgt:

$$SO_2/SO_3\text{-Konversionsrate} = \frac{SO_3\text{-Ausgangskonz. [Vol.-ppm]}}{SO_2\text{-Eingangskonz. [Vol.-ppm]}} \cdot 100$$

$$NOx\text{-Umsatz} = \left(1 - \frac{NO_x\text{-Ausgangskonz. [Vol.-ppm]}}{NO_x\text{-Eingangskonz. [Vol.-ppm]}}\right) \cdot 100$$

$$Alkohol\text{-Umsatz} = \left(1 - \frac{Alkohol\text{-Ausgangskonz. [Vol.-ppm]}}{Alkohol\text{-Eingangskonz. [Vol.-ppm]}}\right) \cdot 100$$

**Patentansprüche**

1. Verfahren zur Entfernung von Stickoxiden aus Abgasen durch katalytische Reduktion der Stickoxide zu Stickstoff mit Hilfe von Ammoniak in Gegenwart eines Katalysators auf Basis von Titandioxid,
dadurch gekennzeichnet,
daß dem Abgas vor Überleiten Ober den Katalysator ein Alkohol zugesetzt und anschließend das Abgas bei Temperaturen von 150 bis 550 °C über den Katalysator geleitet wird.

2. Verfahren nach Anspruch 1,
dadurch gekennzeichnet,
daß dem Abgas ein Alkohol mit 1 bis 10 C-Atomen zugesetzt wird.

**3.** Verfahren nach den Ansprüchen 1 und 2,
dadurch gekennzeichnet,
daß dem Abgas ein aliphatischer, cycloaliphatischer oder aromatischer Alkohol zugesetzt wird.

**4.** Verfahren nach Anspruch 3,
dadurch gekennzeichnet,
daß dem Abgas Butanol zugesetzt wird.

**5.** Verfahren nach den Ansprüchen 1 bis 4,
dadurch gekennzeichnet,
daß dem Abgas pro Mol Ammoniak 0,01 bis 10 Mole Alkohol zugesetzt werden.

**6.** Verfahren nach Anspruch 5,
dadurch gekennzeichnet,
daß dem Abgas pro Mol Ammoniak 0,05 Mole bis 1 Mol Alkohol zugesetzt werden.

**7.** Verfahren nach den Ansprüchen 1 bis 6,
dadurch gekennzeichnet,
daß das Abgas mit Raumgeschwindigkeiten (GHSV) von 300 bis 100 000 $h^{-1}$ über den Katalysator geleitet wird.

**8.** Verfahren nach den Ansprüchen 1 bis 7,
dadurch gekennzeichnet,
daß das Abgas bei Temperaturen von 200 bis 450 °C über den Katalysator geleitet wird.

**9.** Verfahren nach den Ansprüchen 1 bis 8,
dadurch gekennzeichnet,
daß der Katalysator weitere katalytisch aktive Komponenten enthält.

**10.** Verfahren nach Anspruch 9,
dadurch gekennzeichnet,
daß der Katalysator als weitere katalytisch aktive Komponenten Vanadin und/oder Wolfram und/oder Molybdän und/oder Eisen und/oder Nickel und/oder Kobalt und/oder Kupfer und/oder Chrom und/oder Zirkonium enthält.

**11.** Verfahren nach den Ansprüchen 1 bis 10,
dadurch gekennzeichnet,
daß das Abgas ein Rauchgas ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE WPI<br>Section Ch, Week 8005,<br>Derwent Publications Ltd., London, GB;<br>Class E36, AN 80-08112C<br>* Zusammenfassung *<br>& PATENT ABSTRACTS OF JAPAN<br>vol. 004, no. 019 (C-073)16. Februar 1980<br>& JP-A-54 158 372 ( HITACHI LTD ) 14.<br>Dezember 1979<br>* Zusammenfassung *<br>--- | 1-3,5-10 | B01D53/36<br>B01J21/06 |
| X | DATABASE WPI<br>Section Ch, Week 7940,<br>Derwent Publications Ltd., London, GB;<br>Class E36, AN 79-72648B<br>* Zusammenfassung *<br>& PATENT ABSTRACTS OF JAPAN<br>vol. 003, no. 130 (M-078)27. Oktober 1979<br>& JP-A-54 108 021 ( MITSUBISHI HEAVY IND<br>LTD ) 24. August 1979<br>* Zusammenfassung *<br>--- | 1-3,8-10 | |
| X | DATABASE WPIL<br>Section Ch, Week 8122,<br>Derwent Publications Ltd., London, GB;<br>Class E36, AN 81-38858D<br>* Zusammenfassung *<br>& PATENT ABSTRACTS OF JAPAN<br>vol. 005, no. 094 (C-059)19. Juni 1981<br>& JP-A-56 037 029 ( MITSUBISHI HEAVY IND<br>LTD ) 10. April 1981<br>* Zusammenfassung *<br>--- | 1-3,5,6,<br>8-10 | RECHERCHIERTE SACHGEBIETE (Int. Cl.5)<br><br>B01D<br>B01J |
| Y,D | EP-A-0 313 115 (METALLGESELLSCHAFT AG)<br>* Spalte 2, Zeile 4 - Zeile 13; Ansprüche 1-6 *<br>---<br>-/-- | 1-10 | |

Der vorliegende Recherchenbericht wurde für alle Patentansprüche erstellt

| Recherchenort | Abschlußdatum der Recherche | Prüfer |
|---|---|---|
| DEN HAAG | 04 JANUAR 1993 | EIJKENBOOM T. |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
      Dokument

EPO FORM 1503 03.82 (P0403)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | DE-A-2 539 346 (TOA NENRYO KOGYO KK) * Seite 5, Absatz 2 - Seite 7, Absatz 1; Ansprüche 1-8 * --- | 1-10 | |
| Y,D | DE-C-2 458 888 (MITSUBISHI PETROCHEMICAL CO. ET AL.) * Ansprüche 1-2 * --- | 1-10 | |
| A | DATABASE WPI Section Ch, Week 8009, Derwent Publications Ltd., London, GB; Class E36, AN 80-15690C * Zusammenfassung * & PATENT ABSTRACTS OF JAPAN vol. 004, no. 034 (C-003)22. März 1980 & JP-A-55 008 880 ( SUMITOMO HEAVY IND LTD ) 22. Januar 1980 * Zusammenfassung * ----- | 1-3,8-10 | |

RECHERCHIERTE SACHGEBIETE (Int. Cl.5 )

Der vorliegende Recherchenbericht wurde für alle Patentansprüche erstellt

| Recherchenort | Abschlußdatum der Recherche | Prüfer |
|---|---|---|
| DEN HAAG | 04 JANUAR 1993 | EIJKENBOOM T. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)